# EUROPÄISCHE PATENTSCHRIFT

(11) **EP 2 782 847 B1**
(45) Veröffentlichungstag und Bekanntmachung des Hinweises auf die Patenterteilung: **10.08.2016**
(21) Anmeldenummer: 12788564.8
(22) Anmeldetag: 22.11.2012
(51) Int. Cl.: B65B 43/00, B65B 51/04, B65D 65/02, B65D 53/02, B65D 65/22, B65B 11/00, B65B 53/02

(54) **SCHUTZHÜLLENSATZ UND VERFAHREN ZUM VERPACKEN EINES GROSSBAUTEILS**
COVER ASSEMBLY AND METHOD FOR PACKAGING OF A LARGE PRODUCT
COUVERTURE DE MONTAGE ET PROCEDE DE CONDITIONNEMENT D'UNE GRANDE PRODUIT

(30) Priorität: 26.11.2011 DE 102011087161
(43) Veröffentlichungstag der Anmeldung: 01.10.2014
(73) Patentinhaber: Senvion GmbH, 22297 Hamburg (DE)
(72) Erfinder: MÜLLER, Christoph, 24582 Wattenbek (DE); SCHUMANN, Sven, 24992 Janneby (DE)
(74) Vertreter: Glawe, Delfs, Moll
(86) Internationale Anmeldenummer: PCT/EP2012/073371
(87) Internationale Veröffentlichungsnummer: WO 2013/076201

(56) Entgegenhaltungen:
- WO-A1-02/083523
- WO-A1-2006/101265
- GB-A- 1 519 214

## Beschreibung

Die Erfindung betrifft ein Verfahren zum Verpacken von Großbauteilen und einen Schutzhüllensatz.

Großbauteile, die für eine Langzeitlagerung vorgesehen sind, unterliegen an der Lagerstätte den Einflüssen von Schmutz, Feuchtigkeit und anderen Umweltkomponenten. Diese schädigenden Einflüsse führen zu Korrosion und Schimmelbildung, wodurch eine Schädigung der Elektrik auftreten kann. Zusätzliche Hilfsmittel, die z.B. die Feuchtigkeit innerhalb der Großbauteile reduzieren sollen, werden durch diese Einflüsse ebenfalls beeinträchtigt. Die Langzeitlagerung von Großbauteilen findet nicht nur an Land statt, sondern ebenfalls beim Export der Bauteile auf Schiffen. Da der Export von Großbauteilen heutzutage sehr verbreitet ist, werden die Großbauteile häufig auf dem Seeweg verschifft. Es ist bekannt, dass die Umweltbedingungen auf dem offenen Meer nicht geschützte Komponenten der Bauteile, wie z.B. blanke Metalloberflächen, schnell korrodieren lassen. Es werden demnach Schutzmechanismen für die Großbauteile benötigt, die diese vor schädigenden Einflüssen abschirmen.

Bekannte Verfahren umfassen das Einschweißen der Großbauteile in Folie, wobei vorher scharfe Kanten abgeklebt werden. Dabei werden die Großbauteile mit der Folie umhüllt und die Kanten der Folie miteinander verschweißt. Im weiteren Verlauf des Verfahrens kann die Folie eingeschrumpft werden, so dass sie eng an der Oberfläche des Bauteils anliegt. Dies hat zur Folge, dass keine verschmutzte Luft oder Feuchtigkeit zwischen der Folie und der zu schützenden Oberflächen verbleibt. Nachteile dieses Verfahrens sind die hohen Kosten, die dadurch entstehen, dass die Folie vor jedem Transportvorgang entfernt und entsorgt werden muss, insbesondere, um an unter der Folie angeordnete Transporthalterungen zu gelangen. Nach dem Transportvorgang muss, wenn wieder eine Lagerung vorgesehen ist, die Einschweißung mit Folie erneut vorgenommen werden. Wird die Einschweißung nicht korrekt durchgeführt, bewirkt das Verfahren das Gegenteil des gewünschten Schutzeffektes. Durch nicht korrekt durchgeführte Einschweißung entstehen Öffnungen, durch die Feuchtigkeit und Staub in das Innere des Großbauteils eindringen können. Schimmel und Korrosion sind die Folgen davon. Weiter kann die Folie, sofern das Großbauteil im Freien gelagert wird, sich ablösen und wegfliegen. Das Wegfliegen der Folie kann weitere Folgen auf Dritte haben. Weiter kann das Großbauteil im eingeschweißten Zustand nicht von innen gewartet werden. Jede Beschädigung der Folie hat einen erneuten Einschweißvorgang zur Folge.

Damit liegt der Erfindung die Aufgabe zugrunde, einen verbesserten kostengünstigeren Schutz vor schädlichen Umwelteinflüssen und eine Wartungsmöglichkeit der Großbauteile bei Langzeitlagerung, Lagerung an unbefestigten oder nicht elektrifizierten Lagerplätzen und beim Transport bereitzustellen.

Die Aufgabe wird gelöst durch die Merkmale der unabhängigen Ansprüche. Vorteilhafte Weiterbildungen sind Gegenstand der abhängigen Ansprüche.

Die Erfindung umfasst ein Verfahren zum Verpacken eines Großbauteils in eine Schutzhülle, die einen ersten und zweiten wiederverschließbaren Zugang und eine Mehrzahl von Schützhüllenteilen aufweist, wobei das Großbauteil eine Zugangsöffnung aufweist. Das Verfahren umfasst folgende Schritte: Bereitstellung von vorkonfektionierten Schutzhüllenteilen; Anbringen der Schutzhüllenteile am Großbauteil; Verschweißen der Übergänge zwischen den Schutzhüllenteilen; Einschrumpfen der Schutzhülle; und Anordnen des ersten wiederverschließbaren Zugangs in der Schutzhülle.

Im Folgenden werden einige verwendete Begriffe erläutert:
Unter Großbauteil wird eine Komponente einer großen Maschine, insbesondere einer Windenergieanlage, verstanden, die mindestens eine Zugangsöffnung aufweist. Meist ist die Zugangsöffnung so groß, dass sie eine Luke zum Einstieg von Bedienpersonal ist. Typischerweise beträgt das lineare Gesamtmaß (Summe aus Länge, Breite und Höhe) des Großbauteils mindestens fünf Meter. Beispiele für Großbauteile sind die Gondel oder die Rotornabe der Windenergieanlage.

Unter Vorkonfektionierung wird verstanden, dass Teile der Schutzhülle auf die Maße der abzudeckenden Teilflächen eines Großbauteils zugeschnitten sind. Das Schutzhüllenteil kann ein- oder mehrteilig sein. Das Vorkonfektionieren beinhaltet somit auch den Zuschnitt und das Zusammenfügen (beispielsweise durch Verkleben) eines Schutzhüllenteils, das als komplexes Schutzhüllenteil ausgeführt ist und beispielsweise für Oberseite und eine oder mehrere Seitenflächen vorgesehen sein kann. Weisen die Teile Schrumpfeigenschaften auf, sind die Maße vorzugsweise so gewählt, dass die Teile nach der Schrumpfung die Maße der abzudeckenden Teilflächen aufweisen. Damit kann die Schutzhülle flatterfrei das Großbauteil umhüllen.

Durch die Vorkonfektionierung der Schutzhüllensteile vor Beginn des Verfahrens wird der Verpackungsvorgang verglichen mit den bekannten Verfahren erheblich beschleunigt. Weiter bietet die Vorkonfektionierung den Vorteil, dass die vorkonfektionierten Teile in Serie hergestellt werden können. Dies hat zur Folge, dass die Schutzhüllenteile für mehrere Großbauteile gleicher Art günstiger hergestellt bzw. bezogen werden können.

Das Einsetzen von wiederverschließbaren Zugängen bewirkt, dass zum Einen eine Wartung der Großbauteile während der Lagerung möglich ist. Zum Anderen sind Transportvorrichtungen am und/oder im Großbauteil auch im verpackten Zustand von außen erreichbar, ohne dass die Schutzhülle beschädigt wird. Das Großbauteil kann also im verpackten Zustand transportiert werden und nach dem Transport weiterhin sicher gelagert werden.

Die mit diesem Verfahren verpackten Großbauteile weisen einen luftdicht abgeschlossenen Innenraum auf, so dass kein Schmutz und keine Feuchtigkeit eindringen können. Dadurch wird eine Korrosions-, Schimmel- und Beschädigungsgefahr weitgehend vermieden. Weiter wird dadurch die Elektrik des Bauteils auch bei Langzeitlagerung geschützt und bleibt voll funktionsfähig. Zusätzliche Hilfsmittel wie z.B. feuchtigkeitsaufnehmende Substanzen, die im Inneren des Großbauteils angeordnet sein können, werden ebenfalls nicht durch die Umwelteinflüsse in ihrer Funktion gestört.

Mit Vorteil umfasst das Verfahren die Fixierung der Schutzhüllenteile mit Klebeband und/oder Spannbändern während des Anbringens. Dies hat den Vorteil, dass das Schutzhüllenteil nicht verrutscht und auf diese Weise Wiederholungen des Anbringvorgangs vermieden werden können. Dadurch wird das Verfahren weiter kostengünstiger.

Weiter ist es vorteilhaft, die Schutzhülle an der tiefsten Stelle mit einer Abflußvorrichtung zu versehen. Damit wird vermieden, dass sich Kondenswasser im Inneren des Großbauteils ansammelt. Durch die Abflußvorrichtung, die im einfachsten Fall als Schlitz ausgeführt ist, kann das Kondenswasser aus der Schutzhülle hinaus fließen, so dass keine Schäden am Großbauteil auftreten.

Vorteilhafterweise sind die Schutzhüllenteile als Folien ausgeführt. Folien sind leicht zu handhaben und können miteinander verschweißt werden. Dadurch kann mit einfachen Mitteln eine Schutzhülle nicht nur in der Montagehalle, sondern auch noch direkt am Lagerplatz des Großbauteils hergestellt werden. Vorzugsweise sind die Folien schrumpfbar, insbesondere durch Erhitzung. Vorzugsweise sind die Folien biaxial schrumpfend, d. h. die Folien schrumpfen gleichmäßig in beide Folienrichtungen. Die Schutzhülle liegt nach dem Einschrumpfen direkt an der Oberfläche des Bauteils an. Damit können Schmutz und Feuchtigkeit nicht mehr an das Bauteil gelangen. Die geschrumpfte Folie flattert nicht und ist damit einer geringeren Beschädigungsgefahr ausgesetzt. Darüber hinaus ist auch ein eventueller Transport im verpackten Zustand erleichtert, da keine Behinderung oder Gefährdung der Umgebung durch flatternde oder umherfliegende Folienteile auftritt.

Der über der Zugangsöffnung des Großbauteils angeordnete wiederverschließbare Zugang der Schutzhülle ist mit Vorteil als Reißverschluss ausgeführt. Durch Öffnen des Reißverschlusses ist es ermöglicht, im verpackten Zustand des Großbauteils durch die Schutzhülle in das Innere des Großbauteils zu gelangen, ohne die Schutzhülle zu beschädigen. Anstatt eines Reißverschlusses kann auch ein Klettverschluss vorgesehen sein. Auf diese Weise können Wartungsarbeiten innerhalb des verpackten Großbauteils durchgeführt werden.

Mit Vorteil ist als wiederverschließbarer Zugang für eine Dachöffnung des Großbauteils eine starre Dachabdeckung vorgesehen. Eine starre Dachabdeckung bietet den Vorteil einer einfachen Handhabung. Die Dachabdeckung ist wiederverschließbar und ermöglicht den Zugang zu der Dachöffnung des verpackten Großbauteils. Durch ihre feste Ausführung bietet sie Schutz für einen unter der Dachöffnung angeordneten Innenraum. Gegenstände, die auf die Dachabdeckung fallen, können diese daher nicht durchschlagen und in das Innere des Großbauteils fallen. Sie weist mehrere Komponenten auf. Die erste Komponente ist ein Mittelteil. An dem Mittelteil sind seitlich in dessen Ebene zwei Klapptüren angeordnet. Die Dachabdeckung wird an der Schutzhülle über der Dachöffnung des Großbauteils angeordnet. Dabei wird das Mittelteil an dem Großbauteil fixiert. Zweckmäßigerweise sind das Mittelteil und/oder die einzelnen Klapptüren jeweils über separate Spannbänder von innen gegen die Dachabdeckung gezogen. Dies hat den Vorteil, dass das Öffnen der Klapptüren oder das Entfernen der kompletten Dachabdeckung vom Inneren des Großbauteils ausgeführt werden kann, ohne dass dazu die Dachabdeckung oder das Dach des Großbauteils betreten zu werden braucht. Durch das Öffnen der Klapptüren wird ein Durchgang durch die Schutzhülle zur Dachöffnung des Großbauteils gebildet. Zweckmäßigerweise handelt es sich bei der Dachabdeckung um einen zweiten wiederverschließbaren Zugang.

Es ist weiter vorteilhaft, dass die Dachabdeckung Dichtungen aufweist. Durch sie werden die Kontaktflächen zwischen der Dachabdeckung und der Schutzhülle gegen Eindringen von Feuchtigkeit abgedichtet.

Vorteilhafterweise besteht die Dachabdeckung aus Aluminium. Sie ist damit leicht und bietet trotzdem eine hohe Stabilität. Der Transport und das Anbringen der Dachabdeckung werden durch diese Eigenschaften vereinfacht. Weiter unterliegt Aluminium unter normalen Lagerbedingungen keiner wesentlichen Korrosion.

In einer weiteren vorteilhaften Ausführungsform weist die Dachabdeckung in die Schutzhülle eingeschweißte Streben sowie Reißverschlüsse auf. Anstatt der Reißverschlüsse können auch Klettverschlüsse vorgesehen werden. Die Streben sind an gegenüberliegenden Rändern der Dachöffnung angeordnet und überdecken sie. Sie werden mit dem Großbauteil in die Schutzhülle eingeschweißt. Die Schutzhülle wird durch die Streben über der Dachöffnung stabilisiert, so dass die Gefahr des Einreißens der Schutzhülle beim Aufprall von Objekten verringert wird.

Über den Ecken der Dachöffnung werden Reißverschlüsse oder Klettverschlüsse an der Schützhülle angebracht. Durch Öffnen der Verschlüsse wird ein Durchgang durch die Schutzhülle zur Dachöffnung des Großbauteils gebildet.

Vorzugsweise können im Innenraum des gelagerten Großbauteils feuchtigkeitsaufnehmende Elemente platziert werden. Damit wird die Korrosionsgefahr durch Feuchtigkeit noch weiter verringert.

Das Vorsehen von Randverstärkern an den Kanten des Großbauteils bietet den Vorteil, dass zum Einen die Schutzhülle nicht beschädigt wird und zum Anderen die Kanten vor Beschädigungen beim Transport geschützt sind. Weiter wird die Verletzungsgefahr für Mitarbeiter, die an den Transport- bzw. Verpackungsvorgängen beteiligt sind, durch diese Maßnahme verringert. Darüber hinaus werden hervorstehende Teile des Großbauteils, wobei es sich um Anschlagpunkte für Hebezeug handeln kann, abgeklebt zur Vermeidung einer Beschädigung der Schutzhülle.

In der Regel sind weitere Zuschnittmaßnahmen zur Größenanpassung der Schutzhüllenteile nicht erforderlich. Dazu sind vorzugsweise die vorkonfektionierten Schutzhüllenteile so bemessen, dass sie über die Kontur der jeweiligen Seite (bei komplexen Schutzhüllenteilen auch mehrerer Seiten) des Großbauteils nicht weiter herausragen, als es der Schrumpffähigkeit entspricht. Damit ist sichergestellt, dass ohne weitere Zuschnittmaßnahmen allein durch Einschrumpfen die Schutzhülle eng und flatterfrei anliegt.

Weist das Großbauteil an seiner Unterseite eine Kopplungsmöglichkeit zu anderen Großbauteilen auf, so ist es vorteilhaft, an der Schutzhülle einen Bodendeckel für die Abschirmung der Kopplung vorzusehen. Dieser Bodendeckel kann in Form einer durchgehenden wannenförmig ausgestalteten Schutzplane ausgeführt sein, die Schmutz und Feuchtigkeit aus dem Inneren des Großbauteils und von der Kopplungsstelle abschirmt. Für den Transport und die Lagerung des Großbauteils kann ein Transportgestell vorgesehen sein, auf dem das Großbauteil mittels seiner Kopplungsmöglichkeit montiert ist. Für die Lagerung wird dieses Transportgestell in den Lagerdeckel gestellt, wodurch eine Abschirmung der Unterseite des Großbauteils sichergestellt wird. Der Lagerdeckel stellt darüber hinaus sicher, dass keine Flüssigkeiten, insbesondere Öl, aus der Gondel in die Umwelt gelangen können.

Ferner betrifft die Erfindung einen Satz zur Bildung einer Schutzhülle für Großbauteile, wobei die Schutzhülle eine Zugangsöffnung sowie eine Mehrzahl von Schutzhüllenteilen aufweist. Die Schutzhülle ist zur Durchführung des erfindungsgemäßen Verfahrens geeignet.

Die Erfindung wird nachfolgend unter Bezugnahme auf die beigefügte Zeichnung, in der als ein vorteilhaftes Ausführungsbeispiel eine Windenergieanlage dargestellt ist, erläutert. Es zeigen:

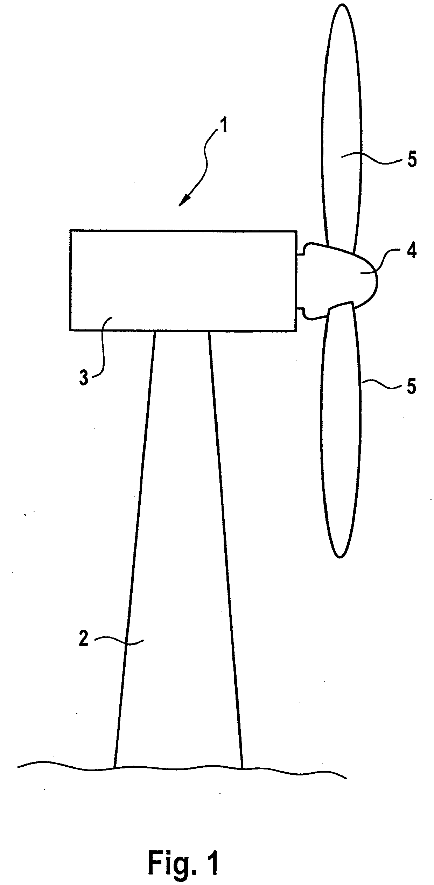

- Fig. 1:: eine schematische Darstellung einer Windenergieanlage;

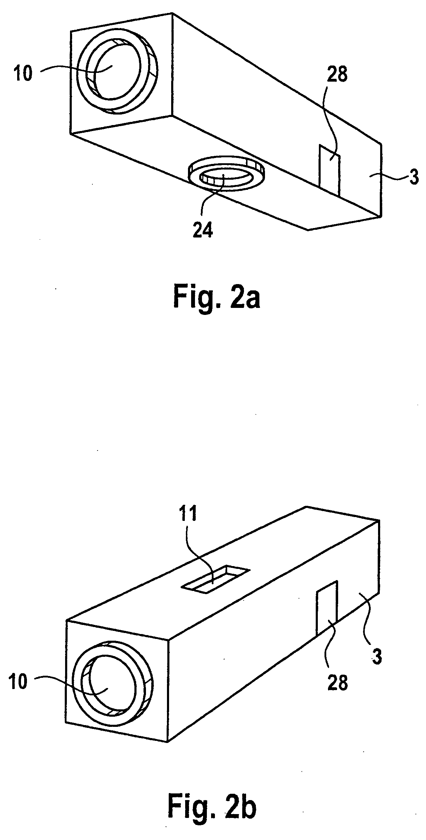

- Fig. 2a,b:: eine schematische Darstellung einer Gondel von einem Blickwinkel von unten und oben;
- Fig. 3:: eine Explosionsansicht von vorkonfektionierten Schutzhüllenteilen, der Gondel und der Dachabdeckung;
- Fig. 4:: eine schematische Darstellung einer verpackten Gondel;
- Fig. 5:: einen Ausschnitt der Gondeloberfläche mit einer schematischen Darstellung einer Dachabdeckung mit geöffneten Klapptüren; und
- Fig. 6a,b:: einen Ausschnitt der Gondeloberfläche mit einer schematischen Darstellung einer alternativen Dachabdeckung aus Streben und Reißverschlüssen vor und nach Anbringen der Folie.

Die Erfindung wird am Beispiel von zur Langzeitlagerung vorgesehenen Großbauteilen einer Windenergieanlage 1 erläutert. Diese umfasst als Großbauteile einen aus mehreren Segmenten bestehenden Turm 2, eine auf ihm drehbar gelagerte Gondel 3 und an der Stirnseite der Gondel 3 einen drehbar gelagerten Rotor mit an einer Rotornabe 4 angeordneten Rotorblättern 5. Vorliegend ist die Gondel 3 das zu verpackende Großbauteil. Sie weist in ihrem Inneren eine Vielzahl von elektronischen Bauteilen auf und an den Kopplungsstellen zum Turm 2 und zur Rotornabe 4 blank geschliffene Metalloberflächen. Aus diesem Grund muss die Gondel 3 bei Lagerung und Transport besonders geschützt werden.

Die Gondel 3 umfasst an ihrer Stirnfläche eine Öffnung 10, durch die eine den Rotor lagernde Welle (nicht dargestellt) geführt ist. Die Öffnung 10 weist an ihrem Rand blanke Metalloberflächen auf. Weiter weist die Gondel 3 eine Dachöffnung 11 an ihrer Oberseite auf, eine Zugangsöffnung 28 an einer ihrer Seiten und an ihrer Unterseite eine Azimutlagerung 24 zur Kopplung mit dem Turm 2. Im dargestellten Ausführungsbeispiel ist die Zugangsöffnung 28 an einer Seitenfläche vorgesehen; genauso gut kann sie als Kranluke ausgeführt sein und an der Unterseite der Gondel 3 angeordnet sein. Die Öffnung 10 und die Azimutlagerung 24 müssen bei Transport und Lagerung vor Feuchtigkeit und Schmutz abgeschirmt werden, um Korrosion und Beschädigungen zu vermeiden. Dazu wird die erfindungsgemäße Schutzhülle genutzt.

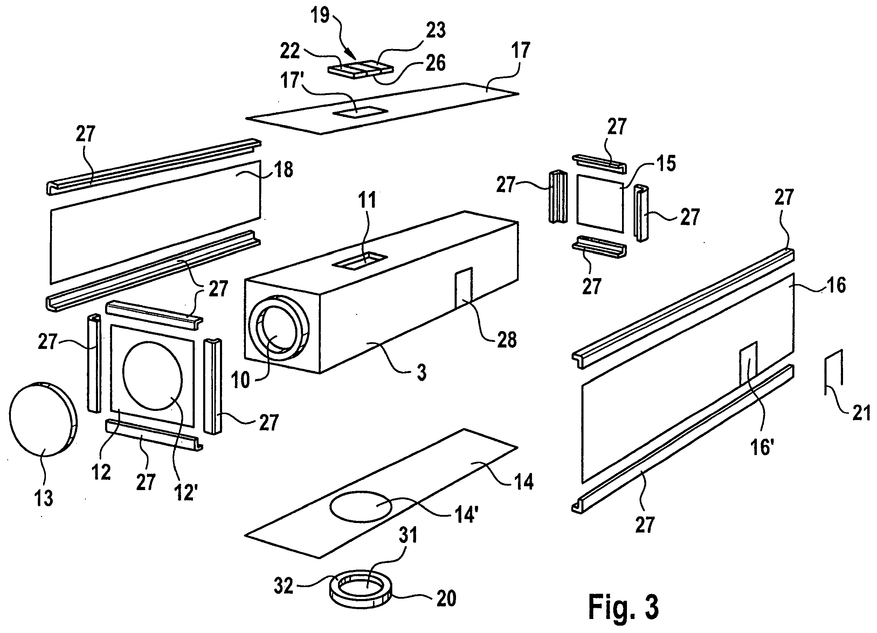

Figur 3 zeigt vorkonfektionierte Teile der Schutzhülle 12, 13, 14, 15, 16, 17, 18 in einer ersten Ausführungsform. Sie bestehen aus Schrumpffolie. Jedes der Teile 12, 14 - 18 bedeckt eine Seite der Gondel 3, wobei Abmessungen und Form der Teile auf die zu bedeckende Seite abgestimmt sind. Unter abgestimmt wird verstanden, dass sie über die Kontur der jeweiligen Seite nicht weiter hinausragen, als es der Schrumpffähigkeit entspricht.

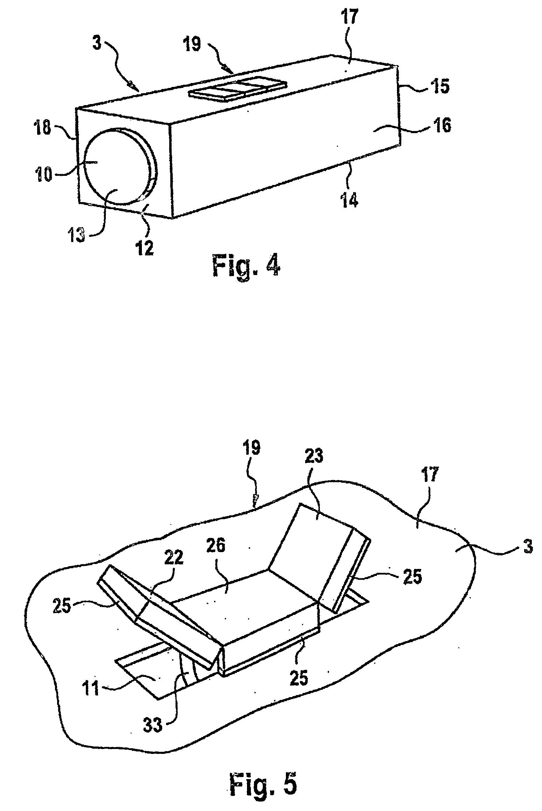

Das Schutzhüllenteil 17 ist für die Oberseite des Großbauteils 3 gedacht. Es umfasst in einer ersten, in Fig. 5 dargestellten Ausführungsform einen Ausschnitt an der Stelle, an der sie die Dachöffnung 11 bedecken würde. Die Dachöffnung 11 wird in dieser Ausführungsform durch eine Dachabdeckung 19 verschlossen, die ein Mittelteil 26 und zwei Klapptüren 22, 23 umfasst. Die Klapptüren 22, 23 sind seitlich an der Dachabdeckung 19 in der Ebene des Mittelteils 26 angeordnet. Sind die Klapptüren 22, 23 geschlossen, bildet die gesamte Dachabdeckung 19 eine plane Oberfläche. Um ein Verrutschen und ein unerwünschtes Öffnen der Klapptüren 22, 23 zu verhindern, sind das Mittelteil 16 und die Klapptüren 22, 23 jeweils mittels Spannbändern 33 mit im Inneren der Gondel 3 befindlichen Befestigungspunkten (nicht dargestellt) verbunden. Durch Lösen einzelner oder mehrerer Spannbänder 33 kann die Dachabdeckung 19 aus der Gondel 3 heraus einfach geöffnet oder komplett entfernt werden. Ein Betreten des Dachs der Gondel 3 zu diesem Zweck ist damit nicht mehr erforderlich. Bei Öffnung der Klapptüren 22, 23 wird ein Durchgang zum Inneren der Gondel 3 gebildet. Durch diesen Durchgang können dann Hebemittel geführt und an die jeweiligen Anschlagpunkte der Gondel angeschlagen werden. Weiter weist die Dachabdeckung 19 Dichtungen 25 auf, die einen luftdichten Kontakt mit der Schützhülle herstellen. Dadurch wird das Eindringen von Schmutz und Feuchtigkeit behindert.

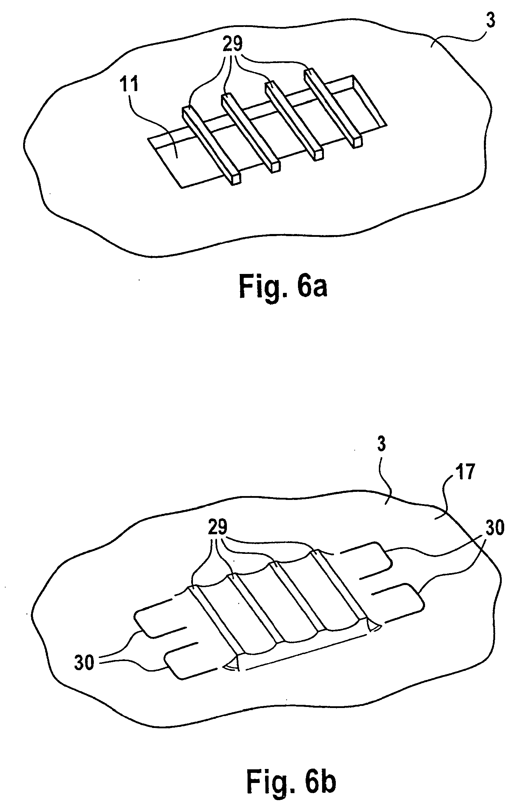

In einer zweiten, in Fig. 6a und 6b dargestellten Ausführungsform der Schutzhülle ist die Dachabdeckung 19 in Form mehrerer Streben 29 ausgeführt, die über der Dachöffnung 11 angeordnet werden. Das Schutzhüllenteil 17 weist in dieser Ausführungsform keinen Ausschnitt an der Stelle auf, die über der Dachöffnung 11 angeordnet wird. Die beiden Enden der Streben 29 sind jeweils an verschiedenen Rändern der Dachöffnung 11 angeordnet und mit dem Großbauteil 3 in die Schutzhülle eingeschweißt. Die Streben 29 stützen den über der Dachöffnung 11 angeordneten Teil der Schutzhülle. Dies verringert die Gefahr einer Beschädigung der Schutzhülle, wenn sie an dieser Position belastet wird. An den Positionen der Schutzhülle, die über den Ecken der Dachöffnung 11 angeordnet sind, werden Reißverschlüsse (oder Klettverschlüsse) 30 eingefügt, um einen Durchgang durch die Schutzhülle zur Dachöffnung 11 zu erhalten.

Das Verfahren zum Verpacken einer Gondel 3 wird nun im Folgenden erklärt.

In einem ersten Schritt werden die vorkonfektionierten Schutzhüllenteile 12, 13, 14, 15, 16, 17, 18 bereitgestellt. Die vorkonfektionierten Teile 12 - 18 sind, wie bereits erwähnt, auf die Abmessungen und die Form der einzelnen Teiloberflächen der Gondel 3 abgestimmt. Die Schutzhüllenteile sind so vorkonfektioniert, dass sie im an der Gondel 3 angebrachten Zustand mit ihren Kanten aneinander stoßen. Für rausragende Elemente, wie z.B. den Rand der Öffnung 10, sind gesonderte Teile 13 der Schutzhülle konfektioniert. Für diese Elemente werden in den Schutzhüllenteilen 12, 14 Aussparungen 12', 14' gebildet.

Bevor die Schutzhüllenteile 12 - 18 an der Gondel 3 angebracht werden, werden zweckmäßigerweise die Kanten der Gondel 3 abgeklebt. Dies geschieht durch das Anbringen von Randverstärkern 27. Diese können als eine Kombination von Klebebändern und Schaumstoffmaterialien ausgeführt sein. Darüber hinaus werden insbesondere Anschlagpunkte auf dem Dach der Gondel 3 und sonstige vorstehende Teile einer Verkleidung der Gondel 3 abgeklebt, um eine Beschädigung der Schutzhülle und ihrer Schutzhüllenteile 12 bis 18 zu vermeiden.

Danach erfolgt in einem weiteren Schritt das Anbringen der Schutzhüllenteile 12 - 18. Dazu werden die einzelnen Teile zunächst nacheinander an der Gondel 3 fixiert. Danach werden die Kanten der Schutzhüllenteile 12 - 18 miteinander verschweißt. Das Verschweißen muss sehr sorgfältig durchgeführt werden, damit keine Öffnungen in den Nähten verbleiben. Besonders vorteilhaft ist es, wenn die Schutzhüllenteile 12 bis 18 derart zugeschnitten oder aus Einzelteilen zu einem komplexen Schutzhüllenteil zusammengesetzt sind, dass mit einem komplexen Schutzhüllenteil mehrere Seiten der Gondel 3 abgedeckt werden. Ist das Verschweißen der Schutzhüllenteile 12 - 18 beendet, wird die Schutzhülle mithilfe einer Hitzequelle eingeschrumpft. Die Hitzequelle kann ein Heißluftgebläse sein. Die hohe Temperatur bewirkt, dass die Schutzhülle einschrumpft und eng bzw. flatterfrei an der Gondel 3 anliegt.

Es erfolgt das Einsetzen der wiederverschließbaren Zugänge 19, 21 in die Schutzhülle. Die wiederverschließbaren Zugänge 19, 21 sind in der ersten Ausführungsform der Schutzhülle als Reißverschluss 21 und als starre Dachabdeckung 19 ausgeführt. Der Reißverschluss 21 wird nach dem Einschrumpfen der Schutzhülle angebracht und um die Zugangsöffnung 28 angeordnet, so dass eine Öffnung des Reißverschlusses 21 einen Durchgang in die Gondel 3 bildet. Hierbei ist es unerheblich, ob der Durchgang in einer Seitenfläche der Gondel oder als Kranluke im Boden der Gondel 3 angeordnet ist.

Die Dachabdeckung 19 wird über der Dachöffnung 11 in einen Ausschnitt 17' des Schutzhüllenteils 17 eingesetzt. Bei einer weiteren, nicht dargestellten Ausführungsform kann die Dachabdeckung 19 auch ausreichend groß gegenüber dem Ausschnitt 17' in der Weise gewählt werden, so dass es ausreicht, die Dachabdeckung 19 lediglich auf den Ausschnitt 17' zu legen, ohne die Dachabdeckung 19 genau in den Ausschnitt 17' einzupassen. Das Mittelteil 26 wird an der Gondel 3 mittels Spannbändern 33 an Befestigungspunkten innerhalb der Gondel 3 befestigt, so dass die Dachabdeckung 19 gegen das Dach der Gondel 3 gezogen wird und nicht verrutschen kann. Durch Öffnen der Klapptüren 22 und 23 können Anschlagpunkte, die im Inneren der Gondel 3 angeordnet sind, durch die Dachöffnung 11 erreicht werden. Auf diese Weise können Hebemittel an den Anschlagpunkten befestigt werden, so dass die Gondel 3 angehoben werden kann.

Weiter weist die Dachabdeckung 19 Dichtungen 25 auf, die beim Anordnen der Dachabdeckung 19 auf der Dachöffnung 11 zwischen der Schutzhülle und der Dachabdeckung 19 angeordnet sind. Dabei werden sie leicht zusammengedrückt und bilden einen luftdichten Übergang zwischen der Dachabdeckung 19 und der Gondeloberfläche. Dies verhindert das Eindringen von feuchter Luft und schützt das Innere der Gondel 3 vor weiteren Umwelteinflüssen. Weiter ist die Dachabdeckung 19 aus Aluminium hergestellt. Die Dachabdeckung 19 aus Aluminium hat den Vorteil, dass sie formstabil ist. Durch die Formstabilität braucht die Schutzhülle an dieser Stelle keine Unterstützung durch die darunter liegende Gondel 3.

Wird das Verfahren mit der zweiten Ausführungsform der Schutzhülle durchgeführt, werden vor dem Anbringen des Schutzhüllenteils 17 die Enden der Streben 29 jeweils an verschiedenen Rändern der Dachöffnung 11 angeordnet. Sie bilden ein Gerüst, das die über der Dachöffnung 11 angeordnete Folie des Schutzhüllenteils 17 trägt. Nach dem Anbringen des Schutzhüllenteils 17 werden die Streben 29 mit dem Großbauteil 3 in die Schutzhülle eingeschweißt. Weiter werden Reißverschlüsse 30 über den Ecken der Dachöffnung 11 an der Schutzhülle angebracht.

Für zusätzlichen Schutz der Standfläche der Gondel 3 ist ein Bodendeckel 20 vorgesehen. Dieser ist wannenförmig ausgeführt und weist einen Boden 31 und einen Rand 32 auf. Die Gondel 3 wird mit ihrem im Bereich der Azimutlagerung 24 montierten Transportgestell in den Bodendeckel 20 angeordnet. Dabei wird der Rand 32 um die Azimutlagerung 24 angeordnet und der Boden 31 unter ihr. Der Bodendeckel 20 und die Schutzhülle liegen dabei dichtend aneinander an.

Als zusätzliche Maßnahme vor Beschädigungen durch Feuchtigkeit, wird die Schutzhülle an ihrer tiefsten Stelle mit einer Abflußvorrichtung versehen. Sollte sich Kondenswasser innerhalb des Großbauteils 3 sammeln, wird es zu der tiefsten Stelle fließen und dort durch die Abflußvorrichtung hinaus fließen, ohne dass feuchte Luft oder Schmutz ins Innere der Gondel gelangen kannDamit ist ein einfacher und effektiver Korrosionsschutz gewährleistet.

Eine weitere Verbesserung des Schutzes vor Feuchtigkeit wird erzielt, indem feuchtigkeitsaufnehmende Substanzen innerhalb des Großbauteils 3 verteilt werden. Auf diese Weise wird eine Trocknung der Luft innerhalb des Großbauteils 3 gewährleistet.

## Patentansprüche

1. Verfahren zum Verpacken eines Großbauteils (3) in eine Schutzhülle, die einen ersten und zweiten wiederverschließbaren Zugang (16', 17') und eine Mehrzahl von Schutzhüllenteilen (12, 13, 14, 15, 16, 17, 18) aufweist, wobei das Großbauteil (3) eine Zugangsöffnung (28) umfasst,
umfassend folgende Schritte:
Bereitstellung von vorkonfektionierten Schutzhüllenteilen (12, 13, 14, 15, 16, 17, 18);
Anbringen der Schutzhüllenteile (12, 13, 14, 15, 16, 17, 18) an dem Großbauteil (3);
Verschweißen der Übergänge zwischen den Schutzhüllenteilen (12, 13, 14, 15, 16, 17, 18);
Einschrumpfen der Schutzhülle; und
Anordnen des ersten wiederverschließbaren Zugangs (16') in der Schutzhülle über der Zugangsöffnung (28).

2. Verfahren nach Anspruch 1, **dadurch gekennzeichnet,**
**dass** die Schutzhüllenteile (12, 13, 14, 15, 16, 17, 18) während des Anbringens an dem Großbauteil (3) fixiert werden.

3. Verfahren nach Anspruch 1 und 2, **dadurch gekennzeichnet, dass** die tiefste Stelle der Schutzhülle mit einer Abflußvorrichtung versehen wird.

4. Verfahren nach einem der vorangehenden Ansprüche,
**dadurch gekennzeichnet, dass** die Schutzhüllenteile (12, 13, 14, 15, 16, 17, 18) als vorzugsweise biaxial schrumpfende Folien ausgeführt sind.

5. Verfahren nach einem der vorangehenden Ansprüche, **dadurch gekennzeichnet, dass** als wiederverschließbarer Zugang (16') ein Reißverschluss (21) vorgesehen ist.

6. Verfahren nach Anspruch 5, **dadurch gekennzeichnet, dass** der Reißverschluss (21) erst nach dem Einschrumpfen angeordnet wird.

7. Verfahren nach einem der vorangehenden Ansprüche, **dadurch gekennzeichnet, dass** die Schutzhüllenteile (12, 13, 14, 15, 16, 17, 18) durch Erhitzung geschrumpft werden.

8. Verfahren nach einem der vorangehenden Ansprüche, **dadurch gekennzeichnet, dass** eine Dachabdeckung (19) aus starrem Material für eine Dachöffnung (11) des Großbauteils als zweiter wiederverschließbarer Zugang (17') überdeckend angeordnet wird und die Dachabdeckung (19) eine erste und eine zweite Klapptür (22, 23) umfasst, wobei die Klapptüren (22, 23) einen Durchgang durch die Schutzhülle zur Dachöffnung (11) bilden.

9. Verfahren nach Anspruch 8, **dadurch gekennzeichnet, dass** die Dachabdeckung (19) Dichtungen (25) zur Abdichtung der Dachöffnung (11) umfasst.

10. Verfahren nach den Ansprüchen 8 oder 9, **dadurch gekennzeichnet, dass** die Dachabdeckung (19) aus Aluminium ausgeführt ist.

11. Verfahren nach den Ansprüchen 1 bis 7, **dadurch gekennzeichnet, dass** als zweiter wiederverschließbarer Zugang (17') Streben (29) und Reißverschlüsse (30) für eine Dachöffnung (11) des Großbauteils angeordnet sind, wobei die Streben (29) verschiedene Ränder der Dachöffnung (11) verbinden und in die Schutzhülle eingeschweißt sind, wobei die geöffneten Reißverschlüsse (30) einen Durchgang durch die Schutzhülle zur Dachöffnung (11) bilden.

12. Verfahren nach einem der vorangehenden Ansprüche,
**dadurch gekennzeichnet, dass** vor dem Anbringen der Schutzhüllenteile (12, 13, 14, 15, 16, 17, 18), Randverstärker (27) an den Kanten des Großbauteils (3) angebracht und/oder hervorstehende Teile an der Gondel (3) abgeklebt werden.

13. Verfahren nach einem der vorangehenden Ansprüche,
**dadurch gekennzeichnet, dass** die vorkonfektionierten Schutzhüllenteile (12, 13, 14, 15, 16,17, 18) so bemessen sind, dass sie über die Kontur der jeweiligen Seiten des Großbauteils nicht weiter hinausragen, als es der Schrumpffähigkeit entspricht.

14. Verfahren nach einem der vorangehenden Ansprüche,
**dadurch gekennzeichnet, dass** die Schutzhülle einen Bodendeckel (20) in Form einer wannenförmigen Plane aufweist.

15. Verfahren nach einem der vorangehenden Ansprüche, **dadurch gekennzeichnet, dass** die Schutzhülle im geschrumpften Zustand flatterfrei ist.

16. Schutzhüllensatz für ein Großbauteil mit einer Zugangsöffnung (28) und einer Dachöffnung, umfassend eine Mehrzahl von Schutzhüllenteilen (12 - 18) aus einem schrumpfbaren Material, einen ersten wiederverschließbaren Zugang (16') für die Zugangsöffnung (28) sowie einen zweiten wiederverschließbaren Zugang (17'),
wobei
die Schutzhüllenteile (12, 13, 14, 15, 16, 17, 18) vorkonfektioniert sind und an ihren Rändern Übergänge zu den jeweils benachbarten Schutzhüllenteilen (12 - 18) des Satzes vorgesehen sind, und zwar derart, dass sie im montierten und geschrumpften Zustand das Großbauteil vollständig umschließen, der erste wiederverschließbare Zugang (16') zur Anordnung über der Zugangsöffnung (28) bestimmt ist und der zweite wiederverschließbare Zugang (17') zur Anordnung über der Dachöffnung (11) bestimmt ist.

17. Schutzhülle für ein Großbauteil, **dadurch gekennzeichnet, dass** sie gebildet ist aus dem Satz nach Anspruch 16 im geschrumpften Zustand.

## Claims

1. Method for packaging a large component (3) into a protective case which comprises a first and a second reclosable access (16', 17') and a plurality of protective case parts (12, 13, 14, 15, 16, 17, 18), wherein the large component (3) includes an access opening (28),
said method including the following steps:
preparing prefabricated protective case parts (12, 13, 14, 15, 16, 17, 18);
attaching the protective case parts (12, 13, 14, 15, 16, 17, 18) to the large component (3);
welding the transitions between the protective case parts (12, 13, 14, 15, 16, 17, 18);
shrinking the protective case; and
arranging the first reclosable access (16') in the protective case above the access opening (28).

2. Method according to Claim 1, **characterized in that** the protective case parts (12, 13, 14, 15, 16, 17, 18) are fixed while being attached to the large component (3).

3. Method according to Claims 1 and 2, **characterized in that** the lowest position of the protective case is provided with a draining device.

4. Method according to one of the preceding claims, **characterized in that** the protective case parts (12, 13, 14, 15, 16, 17, 18) are embodied as films which preferably shrink in a biaxial manner.

5. Method according to one of the preceding claims, **characterized in that** a zip fastener (21) is provided as a reclosable access (16').

6. Method according to Claim 5, **characterized in that** the zip fastener (21) is not arranged until after the shrinking.

7. Method according to one of the preceding claims, **characterized in that** the protective case parts (12, 13, 14, 15, 16, 17, 18) are shrunk as a result of heating.

8. Method according to one of the preceding claims, **characterized in that** a roof covering (19) of rigid material is arranged in an overlapping manner as a second reclosable access (17') for a roof opening (11) of the large component and the roof covering (19) includes a first and a second flap door (22, 23), wherein the flap doors (22, 23) form a passage through the protective case to the roof opening (11).

9. Method according to Claim 8, **characterized in that** the roof covering (19) includes seals (25) for sealing the roof opening (11).

10. Method according to Claims 8 or 9, **characterized in that** the roof covering (19) is embodied from aluminium.

11. Method according to Claims 1 to 7, **characterized in that** struts (29) and zip fasteners (30) are arranged as a second reclosable access (17') for a roof opening (11) of the large component, wherein the struts (29) connect different edges of the roof opening (11) and are welded into the protective case, wherein the opened zip fasteners (30) form a passage through the protective case to the roof opening (11).

12. Method according to one of the preceding claims, **characterized in that** prior to attaching the protective case parts (12, 13, 14, 15, 16, 17, 18), edge reinforcing means (27) are attached to the edges of the large component (3), and/or protruding parts on the nacelle (3) are masked.

13. Method according to one of the preceding claims, **characterized in that** the pre-fabricated protective case parts (12, 13, 14, 15, 16, 17, 18) are dimensioned such that they do not project beyond the contour of the respective sides of the large component any further than corresponds to the capacity of the shrinkage.

14. Method according to one of the preceding claims, **characterized in that** the protective case comprises a bottom cover (20) in the form of a tub-shaped tarpaulin.

15. Method according to one of the preceding claims, **characterized in that** the protective case is flutter-free in the shrunk state.

16. Protective-case set for a large component having an access opening (28) and a roof opening, said protective-case set including a plurality of protective case parts (12 - 18) from a shrinkable material, a first reclosable access (16') for the access opening (28) as well as a second reclosable access (17'),
wherein
the protective case parts (12, 13, 14, 15, 16, 17, 18) are prefabricated and on the edges thereof transitions are provided to the respectively adjacent protective case parts (12 - 18) of the set, in such a manner that, in the attached and shrunk state, said transitions surround the large component completely, the first reclosable access (16') is intended to be arranged above the access opening (28) and the second reclosable access (17') is intended to be arranged above the roof opening (11).

17. Protective case for a large component, **characterized in that** said protective case is formed from the set according to Claim 16 in the shrunk state.

## Revendications

1. Procédé permettant d'emballer une pièce de grande dimension (3) dans une housse de protection qui comporte un premier et un deuxième accès (16', 17') refermable et une pluralité de parties formant housse (12, 13, 14, 15, 16, 17, 18), la pièce de grande dimension (3) comportant une ouverture d'accès (28),
comportant les étapes suivantes:
mise à disposition de parties formant housse (12, 13, 14, 15, 16, 17, 18) pré-confectionnées;
pose des parties formant housse (12, 13, 14, 15, 16, 17, 18) sur la pièce de grande dimension (3);
soudage des jonctions entre les parties formant housse (12, 13, 14, 15, 16, 17, 18);
rétraction de la housse de protection; et
agencement du premier accès (16') refermable dans la housse sur l'ouverture d'accès (28).

2. Procédé selon la revendication 1, **caractérisé en ce que** les parties formant housse (12, 13, 14, 15, 16, 17, 18) sont fixées pendant la pose contre la pièce de grande dimension (3).

3. Procédé selon les revendications 1 et 2, **caractérisé en ce que** l'emplacement le plus profond de la housse de protection est muni d'un dispositif d'écoulement.

4. Procédé selon l'une quelconque des revendications précédentes, **caractérisé en ce que** les parties formant housse (12, 13, 14, 15, 16, 17, 18) sont réalisées sous forme de feuilles rétractables, de préférence bi-axialement.

5. Procédé selon l'une quelconque des revendications précédentes, **caractérisé en ce qu'**une fermeture à glissière (21) est prévue pour former l'accès (16') refermable.

6. Procédé selon la revendication 5, **caractérisé en ce que** la fermeture à glissière (21) est agencée seulement après la rétraction.

7. Procédé selon l'une quelconque des revendications précédentes, **caractérisé en ce que** les parties formant housse (12, 13, 14, 15, 16, 17, 18) se rétractent sous l'effet d'un chauffage.

8. Procédé selon l'une quelconque des revendications précédentes, **caractérisé en ce qu'**un couvercle de toit (19) en matériau rigide pour une ouverture de toit (11) de la pièce de grande dimension est disposé pour le recouvrement de ladite ouverture de toit pour former le deuxième accès (17') refermable, et le couvercle de toit (19) comporte une première et une deuxième porte rabattable (22, 23), lesdites portes rabattables (22, 23) formant un passage à travers la housse vers l'ouverture de toit (11).

9. Procédé selon la revendication 8, **caractérisé en ce que** le couvercle de toit (19) comporte des joints d'étanchéité (25) pour assurer l'étanchéité de l'ouverture de toit (11).

10. Procédé selon la revendication 8 ou 9, **caractérisé en ce que** le couvercle de toit (19) est réalisé en aluminium.

11. Procédé selon l'une quelconque des revendications 1 à 7, **caractérisé en ce que** des traverses (29) et des fermetures à glissière (30) pour une ouverture de toit (11) de la pièce de grande dimension sont disposées en tant que deuxième accès (17') refermable, les traverses (29) reliant différents bords de l'ouverture de toit (11) et étant soudées dans la housse de protection, les fermetures à glissière (30) ouvertes formant un passage à travers la housse vers l'ouverture de toit (11).

12. Procédé selon l'une quelconque des revendications précédentes, **caractérisé en ce qu'**avant la pose des parties formant housse (12, 13, 14, 15, 16, 17, 18), des renforts de bord (27) sont appliqués sur les arêtes de la pièce de grande dimension (3) et/ou les parties saillantes sur la nacelle (3) sont masquées par un élément adhésif.

13. Procédé selon l'une quelconque des revendications précédentes, **caractérisé en ce que** les parties formant housse (12, 13, 14, 15, 16, 17, 18) pré-confectionnées sont dimensionnées de telle sorte qu'elles dépassent au-delà du contour des côtés respectifs de la pièce de grande dimension pas plus loin que ce qui correspond à la capacité de rétraction.

14. Procédé selon l'une quelconque des revendications précédentes, **caractérisé en ce que** la housse de protection comporte un couvercle de fond (20) sous la forme d'une bâche en forme de cuve.

15. Procédé selon l'une quelconque des revendications précédentes, **caractérisé en ce que** la housse de protection à l'état rétracté est exempte de vibrations.

16. Kit de housse de protection pour une pièce de grande dimension avec une ouverture d'accès (28) et une ouverture de toit, comportant une pluralité de parties formant housse (12-18) en matériau rétractable, un accès (16') refermable pour l'ouverture d'accès (28) ainsi qu'un deux accès (17') refermable,
les parties formant housse (12, 13, 14, 15, 16, 17, 18) étant pré-confectionnées et sur leurs bords sont prévues des jonctions vers les parties formant housse (12-18) du kit, à savoir de telle sorte que, à l'état monté et rétracté, elles enveloppent complètement la pièce de grande dimension, le premier accès (16') refermable étant conçu pour être disposé au-dessus de l'ouverture d'accès (28) et le deuxième accès (17') refermable étant conçu pour être disposé au-dessus de l'ouverture de toit (11).

17. Housse de protection pour une pièce de grande dimension, **caractérisée en ce qu'**elle est formée à partir du kit selon la revendication 16 à l'état rétracté.
